# EUROPÄISCHE PATENTSCHRIFT

(11) **EP 1 984 163 B1**
(45) Veröffentlichungstag und Bekanntmachung des Hinweises auf die Patenterteilung: **19.10.2011**
(21) Anmeldenummer: 07703218.3
(22) Anmeldetag: 02.02.2007
(51) Int. Cl.: B29C 65/00, B65B 51/02

(54) **VERFAHREN ZUR HERSTELLUNG UND/ODER VERPACKUNG VON PRODUKTEN (ZIGARETTENSCHACHTELN) AUS ZUSCHNITTEN SOWIE FERTIGUNGSEINHEIT ZUR DURCHFÜHRUNG DES VERFAHRENS**
PROCESS FOR PRODUCTION AND/OR PACKAGING OF PRODUCTS (CIGARETTE BOXES) FROM CUT-TO-SIZE SECTIONS, AND MANUFACTURING UNIT FOR CONDUCT OF THE PROCESS
PROCÉDÉ DE FABRICATION ET/OU D'EMBALLAGE DE PRODUITS (PAQUETS DE CIGARETTES) À PARTIR DE PIÈCES DECOUPÉES ET UNITÉ DE FABRICATION POUR LA MISE EN OEUVRE DU PROCÉDÉ

(30) Priorität: 17.02.2006 DE 102006007827
(43) Veröffentlichungstag der Anmeldung: 29.10.2008
(73) Patentinhaber: Focke & Co. (GmbH & Co. KG), 27283 Verden (DE)
(72) Erfinder: STILLER, Martin, 27283 Verden (DE); BUSE, Henry, 27374 Visselhövede (DE); ENGEL, Gisbert, 27306 Luttum (DE); MAHLMANN, Hermann, 27308 Luttum (DE)
(74) Vertreter: Aulich, Martin
(86) Internationale Anmeldenummer: PCT/EP2007/000889
(87) Internationale Veröffentlichungsnummer: WO 2007/093288

(56) Entgegenhaltungen:
- EP-A- 1 437 303
- DE-A1- 4 241 176
- DE-A1- 19 532 412
- DE-A1- 19 922 516
- DE-U1- 29 805 999
- US-A1- 2004 209 085

## Beschreibung

Die Erfindung betrifft ein Vefahren und eine Fertigungseinheit zur Herstellung von Zigaretten-packungen aus Zuschnitten.

Gerade bei hochpreisigen Zigarettenpackungen gewinnt die äußere Gestaltung der Zgarettenpackung immer weiter an Bedeutung. Die Zlgarettenindustrie geht dazu Ober, zur Herstellung von Zigarettenpackungen aufwändig gestaltete Zuschnitte einzusetzen. Dabei wird die Oberfläche einer Seite des Üblicherweise aus Papier oder Karton bestehenden Zuschnitts beispielsweise vollständig mit einer Schicht aus einem optisch besonders ansprechenden oder ansprechend gestaltbaren Material überzogen, etwa mit einer Metall- oder Kunststoffschicht. Derartig beschichtete Zuschnitte führen allerdings zu Schwierigkeiten bei der Verarbeitung. Vornehmlich die Verklebung einzelner Zuschnittsbereiche miteinander gestaltet sich schwierig, wenn eine der zu verklebenden Flächen beschichtet ist, da Leim auf dieser Beschichtung nur unzureichend haftet. Insbesondere die Verklebung der Seitenlappen der Zlgarettenpackung ist von diesem Problem betroffen, da bei diesen eine Kartonschicht des einen Seitenlappens mit einer beschichteten Oberfläche des anderen Seitenlappens verklebt werden muss.

Der Erfindung liegt die Aufgabe zugrunde, ein Verfahren zur Herstellung und/oder Verpackung von Produkten, wie etwa Zigarettenpackungen, sowie eine entsprechende Fertigungseinheit anzugeben, mit der die Herstellung und/oder Verpackung von Produkten aus schwierig zu verarbeitenden Zuschnitten, insbesondere beschichteten Zuschnitten, erleichtert wird.

Diese Aufgabe wird gelöst durch ein Verfahren mit den Merkmalen des Anspruchs 1.

Die Aufgabe wird auch gelöst durch eine Fertigungseinheit mit den Merkmalen des Anspruchs 14.

Die Erfindung ermöglicht vorteilhafterweise die gute Verarbeitung, vorzugsweise Verklebung von ansonsten nur schwierig zu verarbeitenden Zuschnitten, insbesondere Zuschnitten mit beschichteter Oberfläche, indem eine Beaufschlagung der Zuschnitte mit einem Plasmastrahl erfolgt. Erfindungsgemäß, wird zugleich eine zentrale Anforderung der Verpackungsindustrie an entsprechende Fertigungsverfahren bzw. Fertigungseinheiten erfüllt, nämlich die eingesetzte Fertigungseinheit mit unterschiedlichen Maschinengeschwindigkeiten fahren zu können, wenn der Plasmastrahl abhängig von der zentralen Maschinengeschwindigkeit gesteuert wird. Beispielsweise beim Anfahren einer Fertigungseinheit sollen die dabei produzierten Produkte, wie etwa Packungen, als Gutprodukte bzw. Gutpackungen gelten. Die Abhängigkeit der Steuerung des Plasmastrahls von der Maschinengeschwindigkeit kann naturgemäß unmittelbarer oder mittelbarer Natur sein. Beispielsweise kann die Drehzahl eines zentralen Antriebsmotors der Fertigungseinheit gemessen werden und in die Steuerung des Plasmastrahls unmittelbar einfließen. Alternativ können aber auch von der Maschinengeschwindigkeit abhängige Produktionsraten der Fertigungseinheit in die Steuerung einfließen. Wie der Fachmann erkennt, gibt es hier vielfältige Möglichkeiten.

Die Erfindung ermöglicht des Weiteren, die Fertigungseinheit auch zur Produktion unterschiedlicher Produkttypen einzusetzen, wenn der Plasmastrahl produkttypenabhängig gesteuert wird. Entsprechend werden die Steuerungsparameter des Plasmaerzeugers an die aktuell produzierten Produkttypen angepasst.

Insbesondere beim Einsatz von Zuschnitten aus Karton- oder Papier, Folie oder dergleichen mit wenigstens einer beschichteten Oberfläche aus Metall, Kunststoff, metallbedampfter Folie oder dergl., oder mit einem Laminat aus Metall, Kunststoff, Folie oder dergl. führt die Plasmastrahlbeaufschlagung der beschichteten Zuschnittsfläche bei einer anschließenden Verleimung derselben mit einer offenen Kartonseite eines anderen Zuschnittsbereichs zu einer deutlich erhöhten Adhäsionswirkung.

Weitere Merkmale der vorliegenden Erfindung ergeben sich aus den beigefügten Unteransprüchen sowie aus der nachfolgenden Beschreibung bevorzugter Ausführungsbeispiele der Erfindung und aus den beigefügten Zeichnungen.

In den Zeichnungen zeigen:
- Fig. 1: eine Zigarettenpackung, nämlich eine Klappschachtel, in perspektivischer Ansicht,
- Fig. 2: einen Schnitt durch die Klappschachtel gemäß Fig. 1 parallel zur Bodenwand gemäß der Schnittebene II in Fig. 1,
- Fig. 3: einen ebenfalls parallel zur Bodenwand verlaufenden Schnitt durch eine alternative Ausführungsform einer Zigarettenpackung entsprechend Fig. 1,
- Fig. 4: eine Verpackungsmaschine für die Herstellung von Zigarettenpackungen in schematischer Seitenansicht,

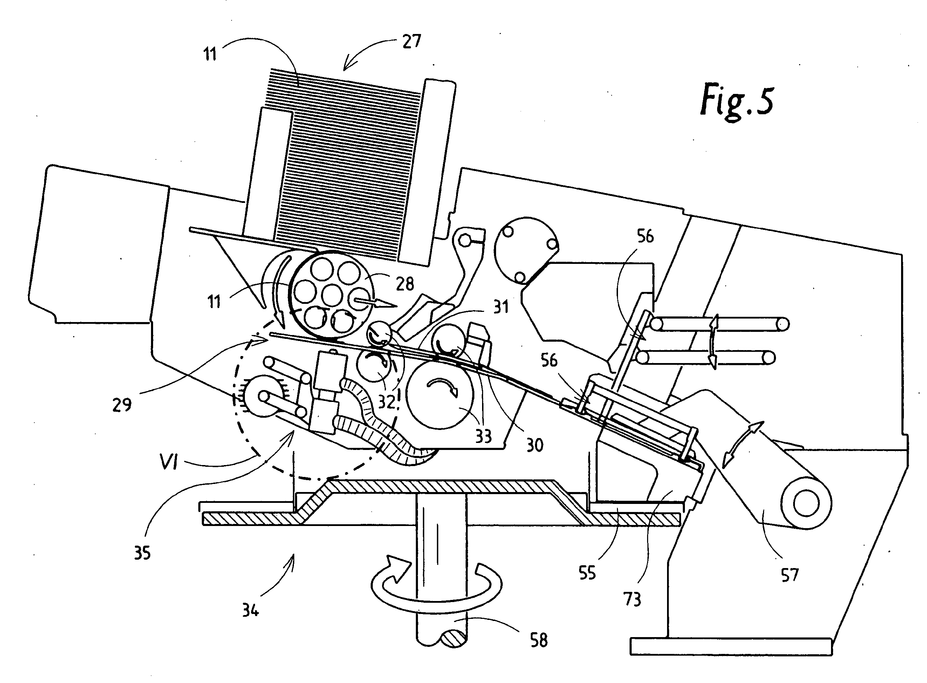

- Fig. 5: eine Einzelheit der Verpackungsmaschine entsprechend dem Pfeil V gemäß Fig. 4 in vergrößertem Maßstab,
- Fig. 6: einen Ausschnitt VI in Fig. 5 in vergrößertem Maßstab,
- Fig. 7: eine Einzelheit der Verpackungsmaschine gemäß Fig. 4 entsprechend der Sichtebene VII in vergrößerter Darstellung,
- Fig. 8: eine schematische Darstellung von Parametersätzen zur Steuerung eines Plasmaerzeugers, jeweils abhängig von Maschinengeschwindigkeit sowie Zigarettenpackungstyp.

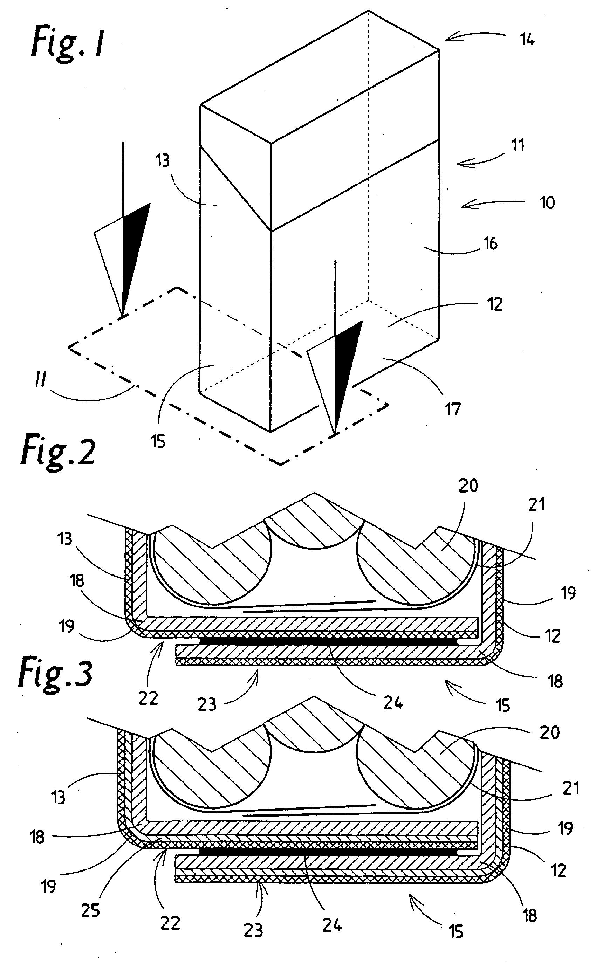

Die Erfindung betrifft die Herstellung von Produkten aus Zuschnitten, insbesondere Zigarettenpackungen. Als bevorzugtes Beispiel ist in Fig. 1 eine Zigarettenpackung 10 des Typs Klappschachtel gezeigt. Diese ist aus einem Packungszuschnitt 11 gebildet, aus dem eine Vorderwand 12, eine Rückwand 13, ein Deckel 14, Seitenwände 15, 16 sowie eine Bodenwand 17 gefaltet wurden.

Wie in Fig. 2 zu erkennen ist, besteht der Zuschnitt 11 aus einer inneren Schicht 18 aus Karton und einer äußeren Schicht 19, mit der der Karton 18 beschichtet wurde. Packungsinhalt der Zigarettenpackung 10 ist eine Gruppe von Zigaretten 20, die in einen Innenzuschnitt 21 aus Papier, Folie oder Staniol eingehüllt ist. Des Weiteren gehört zu diesem Packungstyp Klappschachtel ein aus einem gesonderten, nicht dargestellten Zuschnitt bestehender Kragen.

Die Seitenwand 15 besteht aus zwei parallel zueinander verlaufenden Seitenlappen 22, 23, die Teilbereiche des Zuschnitts 11 bilden und durch entsprechende Faltungen des Zuschnitts 11 in überdeckende Anlage gebracht wurden. Die Seitenlappen 22, 23 sind zur Bildung der Seitenwand 15 durch eine Leimschicht 24 miteinander verbunden. Die Leimschicht 24 verbindet genauer gesagt die äußere (Kunststoff-)Beschichtung 19 des Seitenlappens 22 mit der inneren (Karton-)Schicht 18 des Seitenlappens 23.

In Fig. 3 ist ein weiteres Ausführungsbeispiel einer Zigarettenpackung 10 dargestellt. Im Unterschied zu der Ausführungsform der Fig. 2 ist zwischen der Beschichtung 19 und der inneren Schicht 18 eine Zwischenschicht 25 aus Metall angeordnet. Auch bei dieser Ausführungsform sind die Seitenlappen 22, 23 miteinander durch eine Leimschicht 24 verbunden, indem die äußere (Kunststoff-)Beschichtung des Seitenlappens 22 durch den Leim 24 mit der inneren Schicht 18 des Seitenlappens 23 verleimt ist.

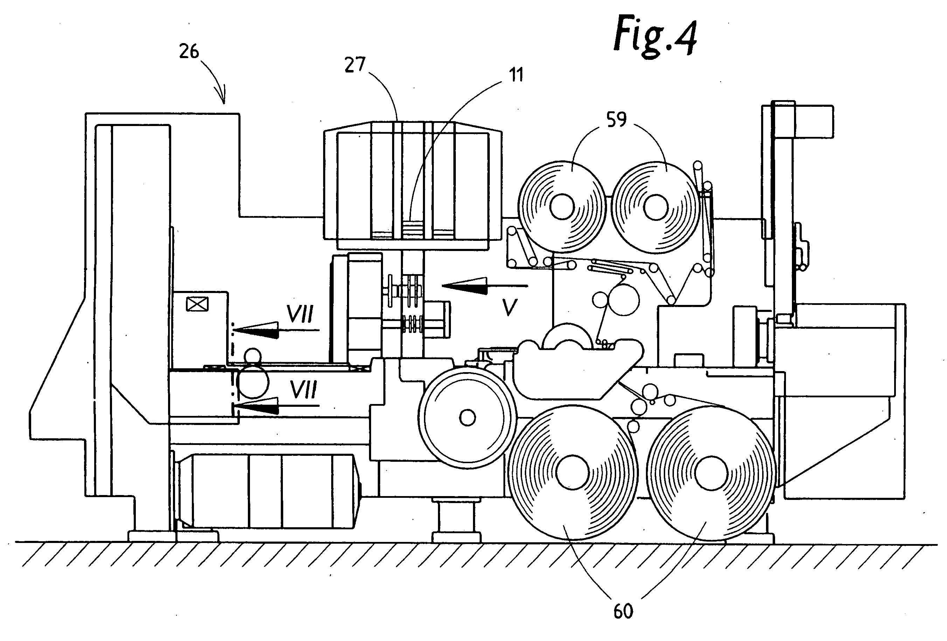

Fig. 4 zeigt eine taktweise arbeitende Fertigungseinheit einer Fertigungs- und/oder Verpackungsanlage, nämlich eine Verpackungsmaschine 26 (Packer), die zur Herstellung einer oben beschriebenen Klappschachtel 10 dient. In der Verpackungsmaschine 26 werden die Packungszuschnitte 11 aus einem Magazin 27 mittels einer Vereinzelungseinrichtung, nämlich einem rotierenden Abrollrad 28, vereinzelt. Dazu sind an der Umfangsfläche des Abrollrades 28 Saugöffnungen angeordnet, die mit Unterdruck beaufschlagbar sind. Das Abrollrad 28 ist unterhalb des Zuschnittmagazins 27 angeordnet und nimmt während einer Rotation jeweils den untersten Zuschnitt 11 des Magazins 27 durch Ansaugen desselben mit, transportiert diesen im Zuge einer (Teil-)Rotation zu einer leicht gegenüber der Horizontalen geneigten Förderbahn 29, die unterhalb des Abrollrades 28 angeordnet ist und legt den Zuschnitt 11 dort ab. Die Zuschnitte 11 sind innerhalb des Magazins 27 übereinander gestapelt, wobei jeweils die (kunststoff-)beschichtete Seite des Zuschnittes 11 nach oben zeigt. Die beschichtete Seite 19 des Zuschnitts 11 zeigt nach dessen Ablage auf der Förderbahn 29 nach unten.

Die Förderbahn 29 weist eine Unterführung 30 sowie eine Oberführung 31 auf, zwischen denen die einzelnen Zuschnitte 11 im weiteren Verlauf nacheinander mittels zweier Förderwalzenpaare 32, 33 gefördert werden, bis sie in den Bereich eines Faltrevolvers 34 gelangen.

Zuvor, d.h. zu Beginn der Förderbewegung auf der Förderbahn 29, werden aufeinander folgende Zuschnitte 11 in Förderrichtung etwa auf Höhe der Vereinzelungseinrichtung 28 von einem Plasmastrahl 36 eines Plasmaerzeugers 35 beaufschlagt. Die Beaufschlagung erfolgt während der Bewegung der Zuschnitte 11, kann alternativ aber auch bei festgehaltenen Zuschnitten 11 geschehen, d.h. ohne Relativbewegung zwischen Plasmastrahl 36 und Zuschnitten 11. Um gezielt einzelne, ausgewählte Bereiche des jeweiligen Zuschnitts 11 zu beaufschlagen, ist es in weiterer Ausbildung der Erfindung denkbar, den Plasmastrahl während der Beaufschlagung des jeweiligen Zuschnitts 11 zeitweise zu unterbrechen und/oder relativ zur Förderbewegung des jeweiligen Zuschnitts 11 zu bewegen, bevorzugt winklig, insbesondere senkrecht zur Förderbewegung.

Der Plasmaerzeuger 35 ist unterhalb der Förderbahn 29 angeordnet. Der Plasmastrahl 36 beaufschlagt jeden einzelnen Zuschnitt 11 von unten vollflächig. Alternativ können nur ausgewählte Zuschnittsbereiche beaufschlagt werden.

Der Plasmastrahl 36 behandelt die nach unten zeigende Beschichtung 19 jedes Zuschnitts 11 vor, um im weiteren Verlauf eine optimale Adhäsion von nachfolgend auf die Beschichtung 19 aufzubringenden Leim zu ermöglichen. Durch den Plasmastrahl 36 werden Verunreinigungen von der Beschichtung 19 entfernt, die Oberfläche wird mikroskopisch leicht angeraut und damit vergrößert, sowie Teile der Molekülketten des Kunststoffes der Beschichtung werden ausgeschlagen, um eine verbesserte chemische Bindung von Leim zu ermöglichen.

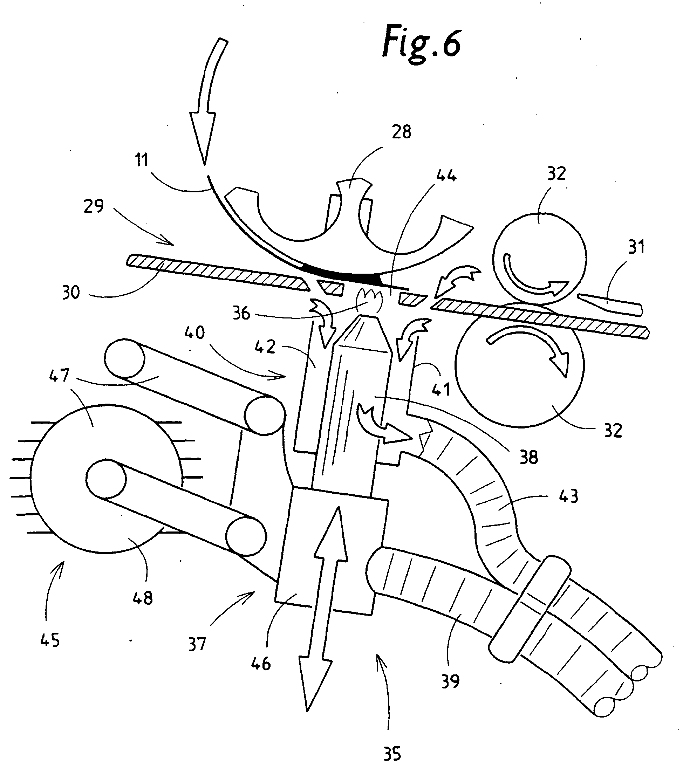

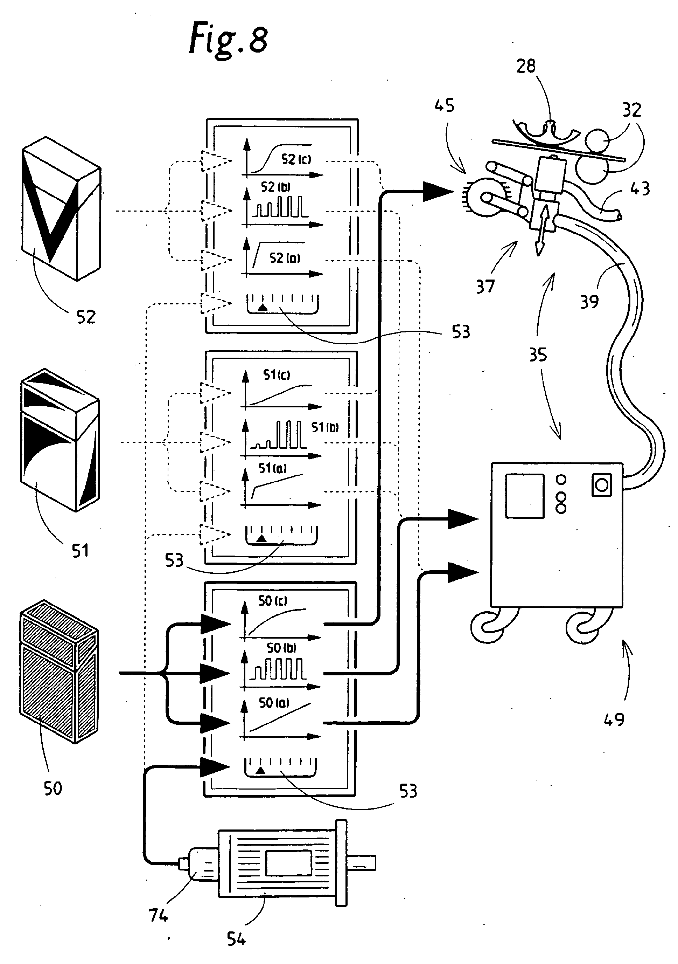

Wie insbesondere in Fig. 6 gut zu erkennen ist, weist der Plasmaerzeuger 35 einen Erzeugerkopf 37 auf mit einer Düse 38, aus dem der Plasmastrahl 36 austritt. Eine Versorgungsleitung 39 führt dem Erzeugerkopf 37 aus einer Gasquelle unter Überdruck stehendes Prozessgas zu, insbesondere Luft. Die Gasquelle ist Teil eines sogenannten Generators 49 (Fig. 8), der Bestandteil des Plasmaerzeugers 35 ist. Der Generator 49 versorgt den Erzeugerkopf 37 unter anderem mit geeigneter Hochspannung. Auf die Darstellung weiterer Einzelheiten über Aufbau und Funktionsweise eines an sich bekannten Plasmaerzeugers wird verzichtet.

Um durch den Plasmastrahl 36 entstehenden Staub, Abbrand sowie schädliche Gase aus dem Umfeld der Düse 38 zu entfernen, ist eine Einrichtung zur Absaugung von Gas 40 vorgesehen. Diese Absaugeinrichtung 40 weist einen nach oben offenen, insbesondere hohlzylindrischen Absaugkopf 41 auf, der die Düse 38 insbesondere konzentrisch umgibt. Zwischen Absaugkopf 41 und Düse 42 ist ein Zwischenraum 42 angeordnet. Eine Unterdruckleitung 43 mündet in den Absaugkopf 41. Die Unterdruckleitung 43 ist an eine nicht dargestellte Unterdruckquelle angeschlossen, so dass während der Beaufschlagung der Zuschnitte 11 entstehende Gase und Schadstoffe über den Absaugkopf 41 aus der Umgebung der Düse 38 abgesaugt werden können.

Wie ebenfalls in der Fig. 6 gut zu erkennen ist, sind in der Unterführung 30 der Förderbahn 29 eine Aussparung 44 vorhanden, die der Plasmastrahl 36 bei der Beaufschlagung jedes Zuschnittes 11 durchtritt.

Der Abstand der Düse 38 von dem jeweils zu beaufschlagenden Zuschnitt 11 ist einstellbar über ein Parallelgetriebe 45. Das Parallelgetriebe 45 ist mit einem Gehäuseteil 46 des Erzeugerkopfes 37 über ein Parallelgestänge 47 verbunden, das von einem Servomotor 48 angetrieben wird.

Ein besonders wichtiger Aspekt der vorliegenden Erfindung ist die Steuerung des Plasmaerzeugers 35. Die Steuerung erfolgt abhängig von dem aktuellen Wert der (zentralen) Maschinengeschwindigkeit der Verpackungsmaschine 26, insbesondere von der Drehzahl eines Antriebsmotors 54 der Verpackungsmaschine 26, sowie abhängig von den aktuell produzierten Zigarettenpackungstypen. Eine Vielzahl von Steuerungsparametern des Plasmaerzeuger 35 hängt von der Maschinengeschwindigkeit ab und mithin von der Geschwindigkeit der an dem Plasmastrahl 36 vorbei bewegten Zuschnitte 11. Beispielsweise wird der Plasmastrahl 36 durch entsprechendes Ein- und Ausschalten des Plasmaerzeugers 35 oder alternativ durch einen Shutter jeweils zwischen aufeinander folgenden Zuschnitten 11 unterbrochen. Je höher dabei die Maschinengeschwindigkeit der Verpackungsmaschine 26 ist, desto größer muss naturgemäß die Unterbrechungsfrequenz sein. Ein anderer Steuerungsparameter des Plasmaerzeugers 35, der von der Maschinengeschwindigkeit abhängt, ist bspw. die Stärke und ggfs. Frequenz der Zündspannung, die an innerhalb des Erzeugerkopfes 36 angeordnete Elektroden angelegt wird. Weiter können der Druck des dem Erzeugerkopf 36 zugeführten Prozessgases, die Impulslänge des jeweiligen Plasmastrahlimpulses sowie der Verstellweg der Plasmaerzeugerdüse 38 relevant sein für Art und Güte der Plasmastrahlbeaufschlagung.

In ähnlicher Weise hängen die Werte der Steuerungsparameter des Plasmaerzeugers 35 von der Art der Zuschnitte 11 ab, insbesondere von der Zuschnittkontur und der jeweiligen Art der Beschichtung, und somit insgesamt von der Art der zu produzierenden Zigarettenpackungstypen. Bei gegebener Maschinengeschwindigkeit 54 können sich daher für verschiedene Zigarettenpackungstypen unterschiedliche Werte der Steuerungsparameter ergeben.

Bevorzugt wird in einem Speicher jeweils für verschiedene Werte der Maschinengeschwindigkeit und/oder für verschiedene Zigarettenpackungstypen jeweils ein Satz von dem entsprechenden Maschinengeschwindigkeitswert und/oder dem Zigarettenpackungstyp zugeordneten Steuerungsparametern des Plasmaerzeugers 35 hinterlegt. Diese Parametersätze werden von der Steuervorrichtung zur Steuerung des Plasmaerzeugers 35 entsprechend der aktuellen Maschinengeschwindigkeit und/oder entsprechend des aktuell produzierten Zigarettenpackungstyps ausgewählt.

Diese Parametersätze können einen Kurvenverlauf in einem Koordinatensystem bilden, mit der Maschinengeschwindigkeit oder einer mit dieser in Zusammenhang stehenden Größe als Abszisse und dem jeweiligen Steuerungsparameter des Plasmaerzeugers 35 als Ordinate, wobei jedem produzierbaren Zigarettenpackungstyp ein derartiger maschinengeschwindigkeitsabhängiger Kurvenverlauf zugeordnet ist. Exemplarisch sind in Fig. 8 für drei verschiedene Zigarettenpackungstypen 50, 51, 52 mit unterschiedlichen Zuschnitten, nämlich unterschiedlichen Beschichtungen sowie Zuschnittkonturen, jeweils maschinengeschwindigkeitsabhängige Kurvenverläufe 50 (a) - 50 (c), 51 (a) - 51 (c), 52 (a) - 52 (c) dargestellt. Die Abszisse der Koordinatensysteme, in denen die jeweiligen Kurvenverläufe abgebildet sind, bildet jeweils die Drehzahl des Antriebsmotors 54 der Verpackungsmaschine 26, die durch ein mittels des Bezugszeichens 53 gekennzeichnetes Symbol visualisiert ist. In der der Zigarettenpackung 50 zugeordneten Kurvendarstellung 50 (a) ist als Ordinate die Düsendruckluft aufgetragen, in der Kurvendarstellung 50 (b) als Ordinate die Zündspannung und in der Kurvendarstellung 50 (c) als Ordinate der Düsenverstellweg. Für die Zigarettenpackungstypen 51 bzw. 52 gilt Entsprechendes. Die Kurven sind in einem Speicher abgelegt, nämlich in einem der Steuerung des Plasmaerzeugers 35 zugeordneten Speicher.

Wenn in der Verpackungsmaschine 26 Zuschnitte 11 des Zigarettenpackungstyps 50 verarbeitet werden sollen, liest die Steuerung des Plasmaerzeugers 35 die jeweiligen Kurvenverläufe 50 aus dem Speicher aus. Des Weiteren wird der Steuerung die aktuelle Geschwindigkeit des zentralen Antriebsmotors 54 der Verpackungsmaschine 26 übermittelt, indem der Wert eines an dem Antriebsmotor 54 angeordneten Drehgebers 74 ausgelesen wird. Abhängig von der aktuellen Drehzahl werden die zu dieser Drehzahl hinterlegten Werte der Düsendruckluft, des Düsenverstellwegs sowie der Zündspannung aus den Kurvenverläufen bestimmt und die Steuerungsparameter des Plasmaerzeugers 36 entsprechend eingestellt.

Nach der Beaufschlagung der einzelnen Zuschnitte 11 mit dem Plasmaerzeuger 35 werden die Zuschnitte 11 durch die Förderwalzenpaare 32, 33 zwischen der Unterführung 30 und der Oberführung 31 in Richtung des Faltrevolvers 34 transportiert, bis er oberhalb einer Tasche 55 des Faltrevolvers 34 liegt. Mittels eines Justierarms 56 wird der Zuschnitt 11 ausgerichtet und anschließend durch einen Stempel 57 entlang von Seitenfaltern 73 in die Tasche 55 eingedrückt. Während taktweiser Rotation des Faltrevolvers 34 um eine zentrale Welle 58 wird der Zuschnitt 11 zu verschiedenen entlang eines Kreisbogens angeordneten Faltstationen geführt, in denen komplexe Faltvorgänge in an sich bekannter Weise durchgeführt werden. Insbesondere werden dabei Zigarettenblöcke zugeführt, die von von Staniolbobinen 59 stammenden Zuschnitten 21 umhüllt sind. Weiter wird dort ein Packungskragen in den Faltprozess eingeführt, wobei der Kragenzuschnitt von Kragenbobinen 60 stammt. Weiter werden verschiedene Zuschnittsbereiche jedes Zuschnitts 11 in dem Faltrevolver 34 mit Leim 24 versehen und mit anderen Zuschnittsbereichen verklebt.

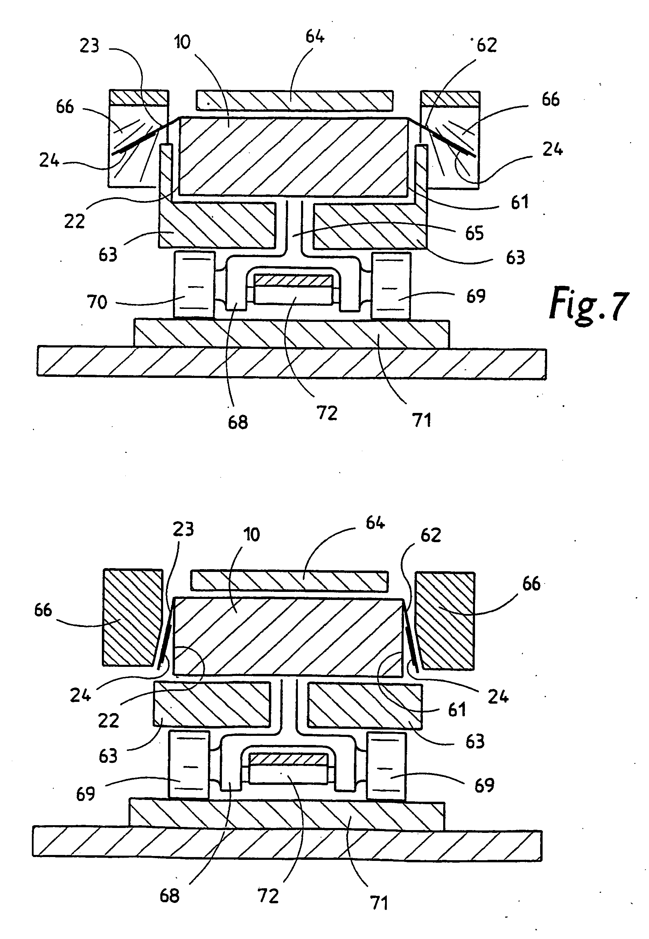

Nach Verlassen des Faltrevolvers 34 werden die Zigarettenpackungen 10 in bereits weitgehend endgefaltetem Zustand einer Faltweichenstation zugeführt, vgl. Fig. 7. Darin werden die Seitenlappen 22, 23 einerseits sowie die Seitenlappen 61, 62 andererseits der Zigarettenpackung 10 miteinander in Anlage gebracht, nachdem in dem Faltrevolver 34 bereits die innere Schicht der Seitenlappen 23, 62, nämlich die Kartonschicht 18, mit Leim 24 versehen wurde.

Um die Seitenlappen 22, 23 sowie 61, 62 jeweils miteinander in Anlage zu bringen, wird die Zigarettenpackung 10 horizontal mit winklig abstehenden Seitenlappen 23, 62 zwischen einer (unteren) Führungsbahn 63 und einer Oberführung 64 durch einen Mitnehmer 65 in Horizontalrichtung gefördert. Dazu ist der Mitnehmer 65 durch eine U-förmige Achse mit Rollen 69, 70 verbunden, die auf einer horizontal verlaufenden Rollenbahn 71 geführt werden. Die Bewegung des Mitnehmers 65 erfolgt durch einen mit dem Mitnehmer 65 verbundenen Zahnriemen 72, der motorisch in nicht dargestellter Weise angetrieben wird.

Wie im Vergleich der oberen Darstellung der Fig. 7 mit der unteren Darstellung der Fig. 7 zu erkennen ist, werden die Seitenlappen 23, 62 während der horizontalen Förderbewegung der Zigarettenpackung 10 an seitlichen Faltweichen 66, 67 vorbeigeführt. Durch geeignete Führung der Seitenlappen 23, 62 in den Faltweichen 66, 67 werden diese in Richtung der Seitenlappen 22, 61 bewegt, bis der Seitenlappen 22 an dem Seitenlappen 23 anliegt und der Seitenlappen 61 an dem Seitenlappen 62.

Durch die vorhergehende Plasmabehandlung der Beschichtung 19 der nach außen zeigenden Seiten der Seitenlappen 22, 61 ergibt sich eine gegenüber dem Stand der Technik stark erhöhte Adhäsionskraft zwischen den Seitenlappen 22, 23 bzw. 61, 62.

### Bezugszeichenliste

- 10: Zigarettenpackung
- 11: Packungszuschnitt
- 12: Vorderwand
- 13: Rückwand
- 14: Deckel
- 15: Seitenwandung
- 16: Seitenwandung
- 17: Bodenwand
- 18: Karton
- 19: Kunststoffbeschichtung
- 20: Zigaretten
- 21: Innenzuschnitt
- 22: Seitenlappen
- 23: Seitenlappen
- 24: Leimschicht
- 25: Metallschicht
- 26: Verpackungsmaschine
- 27: Magazin
- 28: Abrollrad
- 29: Förderbahn
- 30: Unterführung
- 31: Oberführung
- 32: Förderwalzenpaar
- 33: Förderwalzenpaar
- 34: Faltrevolver
- 35: Plasmaerzeuger
- 36: Plasmastrahl
- 37: Erzeugerkopf
- 38: Düse
- 39: Versorgungsleitung
- 40: Einrichtung zum Absaugen von Gas
- 41: Absaugkopf
- 42: Zwischenraum
- 43: Unterdruckleitung
- 44: Ausnehmung
- 45: Parallelgetriebe
- 46: Gehäuseteil
- 47: Parallelgestänge
- 48: Servomotor
- 49: Generator
- 50: Zigarettenpackungstyp
- 50 (a): Kurvendarstellung Düsendruckluft
- 50 (b): Kurvendarstellung Zündspannung
- 50 (c): Kurvendarstellung Düsenverstellweg
- 51: Zigarettenpackungstyp
- 51 (a): Kurvendarstellung Düsendruckluft
- 51 (b): Kurvendarstellung Zündspannung
- 51 (c): Kurvendarstellung Düsenverstellweg
- 52: Zigarettenpackungstyp
- 52 (a): Kurvendarstellung Düsendruckluft
- 52 (b): Kurvendarstellung Zündspannung
- 52 (c): Kurvendarstellung Düsenverstellweg
- 53: Drehzahl
- 54: Antriebsmotor
- 55: Tasche
- 56: Justierarm
- 57: Stempel
- 58: Welle
- 59: Staniolrubine
- 60: Kragenrubine
- 61: Seitenlappen
- 62: Seitenlappen
- 63: Führungsbahn
- 64: Oberführung
- 65: Mitnehmer
- 66: Faltweiche
- 67: Faltweiche
- 68: U-förmige Mitnehmerachse
- 69: Rollen
- 70: Rollen
- 71: Rollenbahn
- 72: Zahnriemen
- 73: Seitenfalter
- 74: Drehgeber

## Patentansprüche

1. Verfahren zur Herstellung von Zigarettenpackungen (10) aus Zuschnitten (11) aus beschichtetem Papier oder Karton, Folie oder dergleichen in einer Verpackungsmaschine (26) einer Fertigungs- und/oder Verpackungsanlage, bei dem die Zuschnitte (11) aus einem Zuschnittmagazin (27) durch eine Vereinzelungseinrichtung (28) vereinzelt und anschließend einer Förderbahn (29) zugeführt werden, und bei dem einzelne Zuschnittsbereiche (22, 61) mit anderen Bereichen (23, 62) desselben oder eines anderen Zuschnitts (11) verbunden werden, indem wenigstens auf einen der zu verbindenden Zuschnittsbereiche (23, 62) Leim (24) aufgetragen wird und die zu verbindenden Zuschnittsbereiche (22, 23, 61, 62) anschließend miteinander in Anlage gebracht werden, wobei zur Verbesserung der Klebewirkung ein beschichteter, mit mindestens einem anderen Zuschnittsbereich (23, 62) zu verbindender Zuschnittsbereich (22, 61) der Zuschnitte (11) von einem abhängig von dem aktuellen Wert der Maschinengeschwindigkeit der Verpackungsmaschine (26) und/oder abhängig von dem aktuell in der Verpackungsmaschine (26) produzierten Produkttyp gesteuerten Plasmastrahl (36) eines Plasmaerzeugers (35) beaufschlagt wird, und wobei der Plasmastrahl (36) bei der Beaufschlagung der Zuschnitte (11) eine Aussparung (44) in der Förderbahn (29) durchtritt.

2. Verfahren gemäß Anspruch 1, **dadurch gekennzeichnet, dass** einzelne Zuschnittsbereiche (22, 61) - insbesondere Faltlappen etc. - mit anderen Bereichen (23, 62) desselben oder eines anderen Zuschnitts (11) verbunden werden, indem wenigstens auf einen der zu verbindenen Zuschnittsbereiche Leim (24) aufgetragen wird und die zu verbindenen Zuschnittsbereiche (22, 23, 61, 62) anschließend miteinander in Anlage gebracht werden, wobei wenigstens einer dieser Zuschnittsbereiche (23, 62) zur Verbesserung der Klebewirkung zuvor mit dem Plasmastrahl (36) beaufschlagt wird.

3. Verfahren gemäß Anspruch 1 oder 2, **dadurch gekennzeichnet, dass** beim Einsatz von Zuschnitten (11) aus Karton- oder Papier, Folie oder dergleichen mit wenigstens einer beschichteten Zuschnittsfläche - insbesondere aus Metall oder Kunststoff - der Plasmastrahl (36) die beschichtete Zuschnittsfläche beaufschlagt.

4. Verfahren gemäß einem oder mehreren der vorhergehenden Ansprüche, **dadurch gekennzeichnet, dass** abhängig von der aktuellen Maschinengeschwindigkeit und/oder abhängig von dem aktuell produzierten Produkttyp (50, 51, 52) der Fertigungseinheit (26) Steuerungsparameter des Plasmaerzeugers (35) eingestellt werden, insbesondere die Zündspannung, der Druck des zugeführten Prozessgases, die Impulslänge des jeweiligen Plasmastrahlimpulses und/oder der Verstellweg der Plasmaerzeugerdüse (38).

5. Verfahren gemäß Anspruch 4, **dadurch gekennzeichnet, dass** in einem Speicher für verschiedene Werte der Maschinengeschwindigkeit und/oder für verschiedene Produkttypen (50, 51, 52) jeweils ein Satz von dem Maschinengeschwindigkeitswert und/oder dem Produkttyp (50, 51, 52) zugeordneten Steuerungsparametern des Plasmaerzeugers (35) hinterlegt sind, wobei die zugeordneten Parametersätze von einer Steuervorrichtung zur Steuerung des Plasmaerzeugers (35) entsprechend der aktuellen Maschinengeschwindigkeit und/oder entsprechend des aktuell produzierten Produkttyps (50, 51, 52) ausgewählt werden.

6. Verfahren gemäß Anspruch 4 oder 5, **dadurch gekennzeichnet, dass** die maschinengeschwindigkeitsbezogenen Steuerungsparametersätze einen Kurvenverlauf (50 (a)-(c), 51 (a)-(c), 52 (a)-(c)) in einem Koordinatensystem bilden mit der Maschinengeschwindigkeit als Abszisse und dem jeweiligen Steuerungsparameter des Plasmaerzeugers (35) als Ordinate, wobei jedem produzierbaren Produkttyp (50, 51, 52) ein derartiger maschinengeschwindigkeitsabhängiger Kurvenverlauf (50 (a)-(c), 51 (a)-(c), 52 (a)-(c)) zugeordnet ist.

7. Verfahren gemäß Anspruch 4, 5 oder 6, **dadurch gekennzeichnet, dass** der Speicher für die maschinengeschwindigkeits- und/oder produktbezogenen Steuerungsparametersätze der zentralen Maschinensteuerung der Fertigungseinheit (26) zugeordnet ist, die die entsprechenden Steuerungssätze aus dem Speicher ausliest und den Plasmaerzeuger (35) steuert.

8. Verfahren gemäß einem oder mehreren der Ansprüche 4 - 7, **dadurch gekennzeichnet, dass** der Speicher für die maschinengeschwindigkeits- und/oder produktbezogenen Steuerungsparametersätze einer von der zentralen Maschinensteuerung getrennten, unmittelbar dem Plasmaerzeuger (35) zugewiesenen Steuerungsvorrichtung zugeordnet ist, die die entsprechenden Steuerungssätze aus dem Speicher ausliest und den Plasmaerzeuger (35) steuert.

9. Verfahren gemäß Anspruch 8, **dadurch gekennzeichnet, dass** der Steuerungsvorrichtung der Wert der aktuellen zentralen Maschinengeschwindigkeit und/oder des aktuell produzierten Produkttyps (50, 51, 52) zur Auswahl des entsprechenden Steuerungsparametersatzes übermittelt wird, insbesondere von der zentralen Maschinensteuerung.

10. Verfahren gemäß einem oder mehreren der vorhergehenden Ansprüche, **dadurch gekennzeichnet, dass** der Wert der aktuellen Maschinengeschwindigkeit von einem Drehgeber (74) erfasst wird, wobei der Drehgeber (74) vorzugsweise die Drehzahl des zentralen Antriebsmotors (54) der Fertigungseinheit (26) erfasst.

11. Verfahren gemäß einem oder mehreren der vorhergehenden Ansprüche, **dadurch gekennzeichnet, dass** der Plasmastrahl (36) und der Zuschnitt (11) während der Beaufschlagung des Zuschnitts (11) durch den Plasmastrahl (36) relativ zueinander bewegt werden, wobei vorzugsweise der Zuschnitt (11) relativ zu dem aus einer ortsfesten Düse (38) austretenden Plasmastrahl (36) entlang einer Förderbahn (29) gefördert wird.

12. Verfahren gemäß einem oder mehreren der vorhergehenden Ansprüche, **dadurch gekennzeichnet, dass** der Plasmastrahl (36) zwischen der Beaufschlagung in Förderrichtung jeweils unmittelbar aufeinanderfolgender Zuschnitte (11) unterbrochen wird, insbesondere durch einen den Plasmastrahl (36) überdeckenden Shutter oder durch Ein- bzw. Ausschalten des Plasmastrahls (36).

13. Verfahren zur Herstellung von Zigarettenpackungen (10), insbesondere gemäß einem oder mehreren der vorhergehenden Ansprüche, die vorzugsweise mit einer Innenumhüllung umhüllte Zigarettenblöcke enthalten, bei dem die Zigarettenpackungen (10) aus einem insbesondere aus beschichtetem Karton, Papier oder dergleichen bestehendem Zuschnitt (11) gefaltet werden, wobei einzelne Zuschnittsbereiche (22, 61) mit anderen Bereichen (23, 62) desselben oder eines anderen Zuschnitts (11) verbunden werden, indem wenigstens auf einen der zu verbindenen Zuschnittsbereiche (23, 62) Leim (24) aufgetragen wird und die zu verbindenen Zuschnittsbereiche (22, 23, 61, 62) anschließend miteinander in Anlage gebracht werden, **dadurch gekennzeichnet, dass** wenigstens einer dieser Zuschnittsbereiche (23, 62) zur Verbesserung der Klebewirkung zuvor mit dem Plasmastrahl (36) eines Plasmaerzeugers (35) beaufschlagt wird.

14. Fertigungseinheit (26) einer Fertigungs- und/oder Verpackungsanlage zur Herstellung von Zigarettenpackungen (10) aus Zuschnitten aus beschichtetem Karton, Papier oder dergleichen, mit einem Magazin für die Zuschnitte (27), einer Vereinzelungseinrichtung (28) mit der die Zuschnitte (11) aus dem Zuschnittmagazin (27) vereinzelbar sind und mit einer Förderbahn (29) zur Förderung der Zuschnitte, wobei einzelne Zuschnittsbereiche (22, 61) mit anderen Bereichen (23, 62) desselben oder eines anderen Zuschnitts (11) verbindbar sind, indem wenigstens auf einen der zu verbindenden Zuschnittsbereiche (23, 62) Leim (24) auftragbar ist, wobei die zu verbindenden Zuschnittsbereiche (22, 23, 61, 62) anschließend miteinander in Anlage bringbar sind, wobei zur Verbesserung der Klebewirkung ein beschichteter, mit mindestens einem anderen Zuschnittsbereich (23, 62) zu verbindender Zuschnittsbereich (22, 61) der Zuschnitte (11) von einem abhängig von dem aktuellen Wert der Maschinengeschwindigkeit der Verpackungsmaschine (26) und/oder abhängig von dem aktuell in der Verpackungsmaschine (26) produzierten Produkttyp gesteuerten Plasmastrahl (36) eines Plasmaerzeugers (35) beaufschlagbar ist, und wobei die Förderbahn (29) eine Aussparung (44) aufweist, die der Plasmastrahl (36) bei der Beaufschlagung der Zuschnitte (11) durchtritt.

15. Fertigungseinheit gemäß Anspruch 14, **gekennzeichnet durch** einen Speicher, in dem für verschiedene Werte der Maschinengeschwindigkeit und/oder für verschiedene Produkttypen (50, 51, 52) jeweils ein Satz von dem Maschinengeschwindigkeitswert und/oder dem Produkttyp (50, 51, 52) zugeordneten Steuerungsparametern des Plasmaerzeugers (35) hinterlegt sind, wobei die zugeordneten Parametersätze von der Steuervorrichtung zur Steuerung des Plasmaerzeugers (35) entsprechend der aktuellen Maschinengeschwindigkeit und/oder entsprechend des aktuell produzierten Produkttyps (50, 51, 52) auswählbar sind.

16. Fertigungseinheit gemäß Anspruch 14 oder 15, **gekennzeichnet durch** ein Zuschnittmagazin (27), eine Einrichtung zur Vereinzelung (28) der Zuschnitte (11) des Zuschnittsmagazins (27), und eine Förderbahn (29) zur insbesondere annähernd horizontalen Förderung der vereinzelten Zuschnitte (11) in den Bereich eines Faltrevolvers (34), wobei der Plasmaerzeuger (35) in Förderrichtung stromauf des Faltrevolvers (34) unterhalb der Förderbahn (29) angeordnet ist, derart, dass die Unterseiten der Zuschnitte (11) mit dem Plasmastrahl (36) beaufschlagbar sind.

17. Fertigungseinheit gemäß einem oder mehreren der Ansprüche 14 - 16, **dadurch gekennzeichnet, dass** der Plasmaerzeuger (35) eine Düse (38) aufweist, aus der der Plasmastrahl (36) austritt, eine Leitung (39) zur Zuführung von Prozessgas zu der Düse (38) sowie eine Verstelleinrichtung (47), mit der die Position der Düse (38) relativ zu den mit dem Plasmastrahl (36) zu beaufschlagenden Zuschnitten (11) einstellbar ist.

18. Fertigungseinheit gemäß einem oder mehreren der Ansprüche 14 - 17, **dadurch gekennzeichnet, dass** der Plasmaerzeuger (35) eine Einrichtung zur Absaugung von Gas (40) aufweist, mittels der verbrauchtes Prozessgas aus der Umgebung der Düse (38) absaugbar ist.

## Claims

1. A process for the production of cigarette packs (10) from cut-to-size sections (11) made from coated paper or cardboard, foil or the like in a packaging machine (26) of a manufacturing and/or packaging system, by means of which the cut-to-size sections (11) are taken individually from a magazine (27) for cut-to-size sections and then fed to a conveying path (29) by a device for separating (28) the cut-to-size sections (11), and by means of which cut-to-size regions (22, 61) are connected to other regions (23, 62) of the same or another cut-to-size section (11) by glue (24) being applied to at least one of the cut-to-size regions (23, 62) which are to be connected, and subsequently by the cut-to-size regions (22, 23, 61, 62) which are to be connected being brought into contact with one another, it being the case that, in order to improve the adhesive action, a coated cut-to-size region (22, 61) which is to be connected to at least one other cut-to-size region (23, 62) of the cut-to-size sections (11) is impinged by a plasma jet (36) of a plasma generator (35) which is controlled as a function of the current value of the machine speed of the packaging machine (26) and/or as a function of the product type currently being produced in the packaging machine (26), and with the plasma jet (36) passing through a cutout (44) in the conveying path (29) during the loading of the cut-to-size sections (11).

2. The process as claimed in claim 1, **characterized in that** individual cut-to-size regions (22, 61), in particular folding tabs, etc., are connected to other regions (23, 62) of the same or another cut-to-size section (11) by glue (24) being applied to at least one of the cut-to-size regions which are to be connected, and by the cut-to-size regions (22, 23, 61, 62) which are to be connected being brought into contact with one another subsequently, at least one of said cut-to-size regions (23, 62) being loaded before this with the plasma jet (36) in order to improve the adhesive action.

3. The process as claimed in claim 1 or 2, **characterized in that** the plasma jet (36) loads the coated cut-to-size face if cut-to-size sections (11) are used which are made from cardboard, paper, foil or the like and have at least one coated cut-to-size face, in particular made from metal or plastic.

4. The process as claimed in one or more of the preceding claims, **characterized in that** control parameters of the plasma generator (35) are set as a function of the current machine speed and/or as a function of the currently produced product type (50, 51, 52) of the manufacturing unit (26), in particular the ignition voltage, the pressure of the process gas which is fed in, the pulse length of the respective plasma jet pulse and/or the movement path of the plasma generator nozzle (38).

5. The process as claimed in claim 4, **characterized in that** in each case one set of control parameters of the plasma generator (35) which are assigned to the machine speed value and/or the product type (50, 51, 52) is stored in a memory for different values of the machine speed and/or for different product types (50, 51, 52), the associated parameter sets being selected by a control apparatus for controlling the plasma generator (35) according to the current machine speed and/or according to the currently produced product type (50, 51, 52).

6. The process as claimed in claim 4 or 5, **characterized in that** the sets of control parameters which relate to the machine speed form a curve profile (50(a) - (c), 51(a) - (c), 52(a) - (c)) in a coordinate system with the machine speed as abscissa and the respective control parameter of the plasma generator (35) as ordinate, each producible product type (50, 51, 52) being assigned a curve profile (50(a) - (c), 51(a) - (c), 52(a) - (c)) of this type which is a function of the machine speed.

7. The process as claimed in claim 4, 5 or 6, **characterized in that** the memory for the sets of control parameters which relate to the machine speed and/or the product is assigned to the central machine controller of the manufacturing unit (26), which central machine controller reads the corresponding control sets from the memory and controls the plasma generator (35).

8. The process as claimed in one or more of claims 4 - 7, **characterized in that** the memory for the sets of control parameters which relate to the machine speed and/or the product is assigned to a control apparatus which is separate from the central machine controller, is assigned directly to the plasma generator (35), reads the corresponding control sets from the memory and controls the plasma generator (35).

9. The process as claimed in claim 8, **characterized in that** the control apparatus is informed of the value of the current central machine speed and/or the currently produced product type (50, 51, 52) in order to select the corresponding set of control parameters, in particular by the central machine controller.

10. The process as claimed in one or more of the preceding claims, **characterized in that** the value of the current machine speed is detected by a rotary encoder (74), the rotary encoder (74) preferably detecting the rotational speed of the central drive motor (54) of the manufacturing unit (26).

11. The process as claimed in one or more of the preceding claims, **characterized in that** the plasma jet (36) and the cut-to-size section (11) are moved relative to one another while the cut-to-size section (11) is being loaded by the plasma jet (36), the cut-to-size section (11) preferably being conveyed along a conveying path (29) relative to the plasma jet (36) which emerges from a stationary nozzle (38).

12. The process as claimed in one or more of the preceding claims, **characterized in that** the plasma jet (36) is interrupted between the loading in the conveying direction of in each case immediately sequential cut-to-size sections (11), in particular by a shutter which covers the plasma jet (36) or by switching the plasma jet (36) on and off.

13. The process for production of cigarette packs (10), in particular as claimed in one or more of the preceding claims which preferably comprise cigarette blocks which are surrounded by an inner wrap, in which process the cigarette packs (10) are folded from a cut-to-size section (11) which comprises, in particular, coated cardboard, paper or the like, individual cut-to-size regions (22, 61) being connected to other regions (23, 62) of the same or another cut-to-size section (11) by glue (24) being applied to at least one of the cut-to-size regions (23, 62) which are to be connected, and by the cut-to-size regions (22, 23, 61, 62) which are to be connected being brought into contact with one another subsequently, **characterized in that** at least one of said cut-to-size regions (23, 62) is loaded before this with the plasma jet (36) of a plasma generator (35) in order to improve the adhesive action.

14. A manufacturing unit (26) of a manufacturing and/or packaging system for the production of cigarette packs (10) from cut-to-size sections (11) made from coated cardboard, paper or the like, with a magazine (27) for the cut-to-size sections, a separating device (28) by means of which the cut-to-size sections (11) are taken individually from the magazine (27) for cut-to-size sections and with a conveying path (29) for conveying the cut-to-size sections (11), it being possible to connect individual cut-to-size regions (22, 61) to other regions (23, 62) of the same or another cut-to-size section (11) in that glue (24) can be applied to at least one of the cut-to-size regions (23, 62) which are to be connected, and subsequently that the cut-to-size regions (22, 23, 61, 62) which are to be connected can be brought into contact with one another, it being the case that, in order to improve the adhesive action, a coated cut-to-size region (22, 61) which is to be connected to at least one other cut-to-size region (23, 62) of the cut-to-size sections (11) is impinged by a plasma jet (36) of a plasma generator (35) which is controlled as a function of the current value of the machine speed of the packaging machine (26) and/or as a function of the product type currently being produced in the packaging machine (26), and with conveying path (29) having a cutout (44) through which the plasma jet (36) passes through during the loading of the cut-to-size sections (11).

15. The manufacturing unit as claimed in claim 14, **characterized by** a memory, in which in each case one set of control parameters of the plasma generator (35), which are assigned to the machine speed value and/or the product type (50, 51, 52), is stored for different values of the machine speed and/or for different product types (50, 51, 52), the associated parameter sets being selected by the control apparatus for controlling the plasma generator (35) according to the current machine speed and/or according to the currently produced product type (50, 51, 52).

16. The manufacturing unit as claimed in claim 14 or 15, **characterized by** a magazine (27) for cut-to-size sections, a device for separating (28) the cut-to-size sections (11) from the magazine (27) for cut-to-size sections, and a conveying path (29) for conveying the separated cut-to-size sections (11), in particular in an approximately horizontal manner, into the region of a folding turret (34), the plasma generator (35) being arranged upstream of the folding turret (34) in the conveying direction and below the conveying path (29) in such a way that the undersides of the cut-to-size sections (11) can be loaded with the plasma jet (36).

17. The manufacturing unit as claimed in one or more of claims 14 - 16, **characterized in that** the plasma generator (35) has a nozzle (38), from which the plasma jet (36) emerges, a line (39) for feeding process gas to the nozzle (38), and a moving device (47), by way of which the position of the nozzle (38) can be set relative to the cut-to-size sections (11) which are to be loaded by the plasma jet (36).

18. The manufacturing unit as claimed in one or more of claims 14 - 17, **characterized in that** the plasma generator (35) has a device for extracting gas (40), by means of which device used process gas can be extracted from the surroundings of the nozzle (38).

## Revendications

1. Procédé de fabrication de paquets de cigarettes (10) à partir de pièces découpées (11) en papier enduit ou en carton, film ou similaire, dans une machine d'emballage (26) d'une installation de fabrication et/ou d'emballage, dans lequel les pièces découpées (11) provenant d'un magasin de pièces découpées (27) sont séparées par un dispositif de séparation (28) et sont ensuite acheminées à une bande transporteuse (29), et dans lequel des régions individuelles d'une pièce découpée (22, 61) sont jointes à d'autres régions (23, 62) de celle-ci ou d'une autre pièce découpée (11), en appliquant de la colle (24) au moins sur l'une des régions de pièce découpée à joindre (23, 62), et en amenant ensuite en appui les unes contre les autres les régions de pièce découpée (22, 23, 61, 62) à joindre, une région enduite de pièce découpée (22, 61) des pièces découpées (11), devant être jointe à au moins une autre région de pièce découpée (23, 62) étant sollicitée, pour améliorer l'effet d'adhésion, par un jet de plasma (36) d'un générateur de plasma (35), commandé en fonction de la valeur actuelle de la vitesse de la machine d'emballage (26) et/ou en fonction du type de produit actuellement produit dans la machine d'emballage (26), et le jet de plasma (36), lors de la sollicitation des pièces découpées (11), traversant un évidement (44) dans la bande transporteuse (29).

2. Procédé selon la revendication 1, **caractérisé en ce que** des régions de pièce découpée individuelles (22, 61) - en particulier des volets pliants etc., - sont jointes à d'autres régions (23, 62) de celle-ci ou d'une autre pièce découpée (11), en appliquant de la colle (24) sur au moins l'une des régions de pièce découpée à joindre, et en amenant ensuite en appui les unes contre les autres les régions de pièce découpée (22, 23, 61, 62) à joindre, au moins l'une de ces régions de pièce découpée (23, 62) étant sollicitée préalablement avec le jet de plasma (36) en vue d'améliorer l'effet de collage.

3. Procédé selon la revendication 1 ou 2, **caractérisé en ce que** lors de l'utilisation de pièces découpées (11) en carton ou en papier, ou en film ou similaire, avec au moins une surface de pièce découpée enduite - notamment en métal ou en plastique - le jet de plasma (36) sollicite la surface enduite de la pièce découpée.

4. Procédé selon l'une quelconque ou plusieurs des revendications précédentes, **caractérisé en ce que**, en fonction de la vitesse actuelle de la machine et/ou en fonction du type de produit (50, 51, 52) en cours de production dans l'unité de fabrication (26), des paramètres de commande du générateur de plasma (35) sont ajustés, en particulier la tension d'allumage, la pression du gaz de processus acheminé, la longueur d'impulsion de l'impulsion du jet de plasma en question et/ou la course de déplacement de la buse (38) du générateur de plasma.

5. Procédé selon la revendication 4, **caractérisé en ce que** dans une mémoire pour différentes valeurs de vitesse de la machine et/ou pour différents types de produits (50, 51, 52) est à chaque fois déposé un jeu de paramètres de commande du générateur de plasma (35) associés à la valeur de la vitesse de la machine et/ou au type de produit (50, 51, 52), les jeux de paramètres associés d'un dispositif de commande pour la commande du générateur de plasma (35) étant sélectionnés en fonction de la vitesse actuelle de la machine et/ou en fonction du type de produit (50, 51, 52) en cours de production.

6. Procédé selon la revendication 4 ou 5, **caractérisé en ce que** les jeux de paramètres de commande rapportés à la vitesse de la machine forment une allure de courbe (50(a)-(c), 51(a)-(c), 52(a)-(c)) dans un système de coordonnées, avec la vitesse de la machine en abscisses et le paramètre de commande respectif du générateur de plasma (35) en ordonnées, à chaque type de produit (50, 51, 52) pouvant être produit étant associée une allure de courbe (50(a)-(c), 51(a)-(c), 52(a)-(c)) dépendant de la vitesse de la machine.

7. Procédé selon la revendication 4, 5 ou 6, **caractérisé en ce que** la mémoire pour les jeux de paramètres de commande rapportés à la vitesse de la machine et/ou au produit, est associée à la commande centrale de machine de l'unité de fabrication (26) qui lit les jeux de commande correspondants dans la mémoire et qui commande le générateur de plasma (35).

8. Procédé selon l'une quelconque ou plusieurs des revendications 4 à 7, **caractérisé en ce que** la mémoire pour les jeux de paramètres de commande rapportés à la vitesse de la machine et/ou au produit est associée à un dispositif de commande séparé de la commande centrale de machine, affecté directement au générateur de plasma (35), qui lit les jeux de commande correspondants dans la mémoire et qui commande le générateur de plasma (35).

9. Procédé selon la revendication 8, **caractérisé en ce que** le dispositif de commande reçoit, notamment de la commande de machine centrale, la valeur de la vitesse actuelle de la machine centrale et/ou du type de produit actuel (50, 51, 52) produit afin de sélectionner le jeu de paramètres de commande correspondant.

10. Procédé selon l'une quelconque ou plusieurs des revendications précédentes, **caractérisé en ce que** la valeur de la vitesse actuelle de la machine est détectée par un détecteur rotatif (74), le détecteur rotatif (74) détectant de préférence la vitesse de rotation du moteur d'entraînement central (54) de l'unité de fabrication (26).

11. Procédé selon l'une quelconque ou plusieurs des revendications précédentes, **caractérisé en ce que** le jet de plasma (36) et la pièce découpée (11) sont déplacés l'un par rapport à l'autre pendant la sollicitation de la pièce découpée (11) par le jet de plasma (36), la pièce découpée (11) étant de préférence transportée le long d'une bande transporteuse (29) par rapport au jet de plasma (36) sortant d'une buse fixe (38).

12. Procédé selon l'une quelconque ou plusieurs des revendications précédentes, **caractérisé en ce que** le jet de plasma (36) entre la sollicitation dans la direction de transport de pièces découpées (11) immédiatement successives est interrompu, notamment par un obturateur couvrant le jet de plasma (36) ou par une coupure intermittente du jet de plasma (36).

13. Procédé de fabrication de paquets de cigarettes (10), en particulier selon l'une quelconque ou plusieurs des revendications précédentes, lesquels contiennent de préférence des blocs de cigarettes enveloppés par une enveloppe intérieure, dans lequel les paquets de cigarettes (10) sont pliés à partir d'une pièce découpée (11) constituée en particulier de carton enduit, de papier ou similaire, des régions de pièce découpée individuelles (22, 61) étant jointes à d'autres régions (23, 62) de celle-ci ou d'une autre pièce découpée (11), en appliquant de la colle (24) au moins sur l'une des régions de pièce découpée à joindre (23, 62), et en amenant ensuite en appui les unes contre les autres les régions de pièce découpée (22, 23, 61, 62) à joindre, **caractérisé en ce qu**'au moins l'une de ces régions de pièce découpée (23, 62) est sollicitée préalablement, pour améliorer l'effet d'adhésion, par un jet de plasma (36) d'un générateur de plasma (35).

14. Unité de fabrication (26) d'une installation de fabrication et/ou d'emballage pour la fabrication de paquets de cigarettes (10) à partir de pièces découpées en carton enduit, en papier ou similaire, comprenant un magasin pour les pièces découpées (27), un dispositif de séparation (28) avec lequel les pièces découpées (11) peuvent être séparées du magasin de pièces découpées (27), et avec une bande transporteuse (29) pour transporter les pièces découpées, des régions de pièce découpée individuelles (22, 61) pouvant être jointes à d'autres régions (23, 62) de celle-ci ou d'une autre pièce découpée (11), en appliquant de la colle (24) au moins sur l'une des régions de pièce découpée à joindre (23, 62), et en amenant ensuite en appui les unes contre les autres les régions de pièce découpée (22, 23, 61, 62) à joindre, une région enduite de pièce découpée (22, 61) des pièces découpées (11), devant être jointe à au moins une autre région de pièce découpée (23, 62) étant sollicitée, pour améliorer l'effet d'adhésion, par un jet de plasma (36) d'un générateur de plasma (35), commandé en fonction de la valeur actuelle de la vitesse de la machine d'emballage (26) et/ou en fonction du type de produit actuellement produit dans la machine d'emballage (26), et la bande transporteuse (29) présentant un évidement (44) à travers lequel passe le jet de plasma (36) lors de la sollicitation des pièces découpées (11).

15. Unité de fabrication selon la revendication 14, **caractérisée par** une mémoire dans laquelle, pour différentes valeurs de vitesse de la machine et/ou pour différents types de produits (50, 51, 52), à chaque fois un jeu de paramètres de commande du générateur de plasma (35) associés à la valeur de vitesse de la machine et/ou au type de produit (50, 51, 52) est déposé, les jeux de paramètres associés du dispositif de commande pour la commande du générateur de plasma (35) pouvant être sélectionnés en fonction de la vitesse actuelle de la machine et/ou en fonction du type de produit (50, 51, 52) en cours de production.

16. Unité de fabrication selon la revendication 14 ou 15, **caractérisée par** un magasin de pièces découpées (27), un dispositif de séparation (28) des pièces découpées (11) du magasin de pièces découpées (27), et une bande transporteuse (29) pour transporter notamment approximativement à l'horizontale les pièces découpées séparées (11) dans la région d'une tourelle de pliage (34), le générateur de plasma (35) étant disposé dans la direction d'avance en amont de la tourelle de pliage (34) sous la bande transporteuse (29), de telle sorte que les côtés inférieurs des pièces découpées (11) puissent être sollicités avec le jet de plasma (36).

17. Unité de fabrication selon l'une quelconque ou plusieurs des revendications 14 à 16, **caractérisée en ce que** le générateur de plasma (35) présente une buse (38), de laquelle sort le jet de plasma (36), une conduite (39) pour acheminer du gaz de processus à la buse (38) ainsi qu'un dispositif de réglage (47), avec lequel la position de la buse (38) par rapport aux pièces découpées (11) à solliciter avec le jet de plasma (36) peut être ajustée.

18. Unité de fabrication selon l'une quelconque ou plusieurs des revendications 14 à 17, **caractérisée en ce que** le générateur de plasma (35) présente un dispositif pour aspirer du gaz (40), au moyen duquel le gaz de processus consommé peut être aspiré hors de l'environnement de la buse (38).
